# EUROPEAN PATENT SPECIFICATION

(11) **EP 2 050 227 B1**
(45) Date of publication and mention of the grant of the patent: **26.06.2019**
(21) Application number: 07784995.8
(22) Date of filing: 27.07.2007
(51) Int. Cl.: H04W 40/22, H04W 56/00

(54) **SYSTEM AND METHOD FOR WIRELESS MULTI-HOP NETWORK SYNCHRONIZATION AND MONITORING**
SYSTEM UND VERFAHREN ZUR SYNCHRONISATION UND ÜBERWACHUNG EINES DRAHTLOSEN MEHRSTROMNETZES
SYSTÈME ET PROCÉDÉ DE SURVEILLANCE ET DE SYNCHRONISATION DE RÉSEAU MULTI-SAUTS SANS FIL

(30) Priority: 28.07.2006 US 820692 P; 08.01.2007 US 883922 P; 02.02.2007 US 887852 P; 19.03.2007 US 895541 P
(43) Date of publication of application: 22.04.2009
(73) Proprietor: BlackBerry Limited, Waterloo, ON N2K 0A7 (CA)
(72) Inventor: ZHANG, Hang, Nepean, Ontario K2G 5Z1 (CA); ZHU, Peiying, Kanata, Ontario K2M 2L4 (CA); TONG, Wen, Ottawa, Ontario K2C 4A7 (CA); FONG, Mo-Han, L'Orignal, Ontario K0B 1K0 (CA); SENARATH, Nimal, Gamini, Nepean, Ontario K2G 6P5 (CA); STEER, David, Nepean, Ontario K2H 8Z8 (CA); YU, Derek, Kanata, Ontario K2K 2K8 (CA); NADEN, James, Mark, Hertford, Hertfordshire SG13 7UY (GB); BAHCECI, Israfil, Nepean, Ontario K2B 6M7 (CA)
(74) Representative: Bryn-Jacobsen, Caelia
(86) International application number: PCT/CA2007/001329
(87) International publication number: WO 2008/011718

(56) References cited:
- EP-A2- 1 519 518
- US-A1- 2005 176 401
- US-A1- 2006 153 132
- US-A1- 2006 256 709
- US-A1- 2007 155 315
- "Handover Schemes in IEEE 802.16j ; C80216j-06_005r1", IEEE DRAFT; C80216J-06_005R1, IEEE-SA, PISCATAWAY, NJ USA, vol. 802.16j, 8 May 2006 (2006-05-08), pages 1-14, XP017628066,
- "Recommendations on IEEE 802.16j ; C80216j-06_004r1", IEEE DRAFT; C80216J-06_004R1, IEEE-SA, PISCATAWAY, NJ USA, vol. 802.16j, 8 May 2006 (2006-05-08), pages 1-14, XP017628064,

## Description

### FIELD OF THE INVENTION

The present invention relates to a method and system for wireless communication and in particular to a method and system for monitoring and synchronizing relay nodes in wireless communication networks.

### BACKGROUND OF THE INVENTION

As the demand for high speed broadband networking over wireless communication links increases, so too does the demand for different types of networks that can accommodate high speed wireless networking. For example, the deployment of Institute of Electrical and Electronics Engineers ("IEEE") 802.11 wireless networks in homes and business to create Internet access "hot spots" has become prevalent in today's society. However, these IEEE 802.11-based networks are limited in bandwidth as well as distance. For example, maximum typical throughput from a user device to a wireless access point is 54MB / sec. at a range of only a hundred meters or so. In contrast, while wireless range can be extended through other technologies such as cellular technology, data throughput using current cellular technologies is limited to a few MB /sec. Put simply, as the distance from the base station increase, the need for higher transmission power increases and the maximum data rate typically decreases. As a result, there is a need to support high speed wireless connectivity beyond a short distance such as within a home or office.

As a result of the demand for longer range wireless networking, the IEEE 802.16 standard was developed. The IEEE 802.16 standard is often referred to as WiMAX or less commonly as WirelessMAN or the Air Interface Standard. This standard provides a specification for broadband wireless metropolitan access networks ("MAN"s) that use a point-to-multipoint architecture. Such communications can be implemented, for example, using orthogonal frequency division multiplexing ("OFDM") communication. OFDM communication uses a multi-carrier technique distributes the data over a number of carriers that are spaced apart at precise frequencies. This spacing provides the "orthogonality" that prevents the demodulators from seeing frequencies other than their own.

The 802.16 standard supports high bit rates in both the uplink to and downlink from a base station up to a distance of 30 miles to handle such services as VoIP, IP connectivity and other voice and data formats. Expected data throughput for a typical WiMAX network is 45 MBits / sec. per channel. The 802.16e standard defines a media access control ("MAC") layer that supports multiple physical layer specifications customized for the frequency band of use and their associated regulations. However, the 802.16e standard does not provide support for multi-hop networks that use relay nodes.

802.16 networks, such as 802.16j networks, can be deployed as multi-hop networks from the subscriber equipment to the carrier base station. In other words, in multi-hop networks, the subscriber device can communicate with the base station directly or through one or more tiers of intermediate devices, e.g., relay nodes.

The complexity involved in supporting multi-hop networks in a robust manner necessarily involves sophisticated control layer protocols. Such protocols do not exist. For example, the base station and relay nodes (also referred to herein as "relay stations") typically utilize a preamble for frame synchronization and to monitor the quality of links to neighbor nodes in the wireless communication environment. Such preambles, however, constitute unwanted overhead - that is to say, they reduce the amount of user data that can be transmitted and, therefore, need to be carefully managed. For example, the separate transmission of preambles for synchronization and neighbor node monitoring unnecessarily consumes bandwidth.

For example, each frame in an IEEE 802.16j based network may include one frame start preamble ("FSP") and one relay preamble ("RSP"). These preambles may be located in separate regions of the downlink ("DL") (from base station to mobile station) sub-frame of the frame. Base stations may transmit both preambles in each frame. A relay node ("RN") may transmit one or both of the preambles in a frame. The RN may also receive one or both types of preamble in a frame and may receive one or more of each type from one or more BSs and or RNs in each frame. A mobile station ("MS") may receive one or more FSPs from one or more BSs and or RNs in each frame.

Consider the case where each RN transmits only one preamble, either an FSP or an RSP but not both, in any one frame. As such, for example, an MS which is only in range of an RN transmitting an RSP is out of coverage, so odd and even hop-length paths are not supported simultaneously by an RN. In this case an RN may support either a path comprising an odd number of hops (even number of RNs) or a path comprising an even number of hops (odd number of RNs) but not both simultaneously. In such an arrangement, paths which could potentially have been of 3-hops in length, for example, may need to be of length 4 hops because of this restriction. The adverse impact on network performance is an increase in delay due to the increased path length and a requirement for a higher density of deployed RNs.

One possible method proposed to overcome this problem is to include two RSPs in each frame, located in regions of the DL sub-frame separate from each other and from the FSP. However, this arrangement imposes additional overhead, reducing the space in the frame available to user traffic. Each RS transmits an FSP and an RSP at one of two separate spots in the sub-frame. Because FSP is transmitted by each RN, both odd and even hop-length paths can be supported simultaneously by an RN.

Another possible method proposed to overcome this problem, while avoiding the increase in overhead associated with transmitting two RSPs in each frame, is to create a "super-frame", in which an RN may transmit different preambles in different frames of the super-frame. For example, a super-frame may comprise two frames and an RN may transmit an FSP in the first frame and an RSP in the second frame. Thus, the RN may support MSs in both odd and even length paths in each super-frame, although only odd or even length paths in any one frame of the super-frame.

MSs may, however, expect to see an FSP at the beginning of each frame. If an RN does not transmit such a preamble in every frame, the MS may become confused. One alternative design of super-frame would therefore include an FSP at the start of every frame. As an RN is unable to receive an FSP when transmitting an FSP, it must rely on receiving an RSP for synchronization purposes. As an RN is also unable to receive an RSP when transmitting an RSP, it transmits an RSP only in alternate frames. Thus, an RN may, for example, not transmit an RSP during the first frame of a super-frame but transmit an RSP in the second frame. During the first frame, the RN may receive an RSP, which it may use to gain frame synchronization and which it maintains to at least the end of the succeeding frame. During the second frame, the RN transmits an RSP, which may provide a source of synchronization to the next RN in the path. This approach requires that traffic be appropriately scheduled to the frames within the super-frame.

A further limitation is that an RN transmitting a preamble of a particular type will not receive preambles of the same type which may have been transmitted by other RNs. For this reason, an RN transmitting only an FSP will be invisible to an RN which is also transmitting an FSP. Similarly, an RN transmitting only an RSP will be invisible to an RN which is also transmitting an RSP. This reduces the ability of an RN to effectively monitor the quality of links in its environment and hence to determine the optimum path.

It is therefore desirable to have method and system that provides a preamble arrangement to support both synchronization and neighbor node monitoring in an efficient manner such that the processing and wireless communication channel overhead associated with the synchronization and neighbor node monitoring is reduced.

### SUMMARY OF THE INVENTION

The invention is defined in the independent claims. Advantageous embodiments are set out in the dependent claims.

The present invention advantageously provides a method and system for using preambles to supporting synchronization and neighbor monitoring in wireless communication networks, including but not limited to those operating under the IEEE 802.16j standard.

In accordance with an aspect, the present invention provides a method for wireless communication in a multi-hop network. A first preamble is transmitted using a first repetition cycle. Monitoring for a second preamble is done in a second repetition cycle. The first repetition cycle is different than the second repetition cycle.

In accordance with another aspect, the present invention provides a method for wireless communication in a multi-hop network. A first preamble type is used for synchronization and a second preamble type is used for neighbor monitoring. A first preamble of the first preamble type is transmitted using a fixed transmission frequency. A second preamble of the second preamble type is transmitted using a non-fixed transmission frequency.

In accordance with still another aspect, the present invention provides a wireless communication system in which a first relay node transmits a first preamble using a first repetition cycle and monitors for a second preamble in a second repetition cycle. The first repetition cycle is different than the second repetition cycle.

Publication XP017628066, pages 1 to 14, relates to handover schemes in IEEE 802.16 J.

US 2006/153132 relates to a method of medium access control for a wireless system that makes possible a subscriber station located out of coverage area of a base station communication with the base station with the help of a relay station. The method includes broadcasting a polling packet by the relay station during the contention period, receiving the polling packet by the relayed subscriber station, transmitting a packet by the relayed subscriber station to the relay station during a predetermined period, and transmitting the packet to the base station by the relay station in the contention period after passing the predetermined period.

The present invention is set out in the independent claims, with some optional features set out in the claims dependent thereto.

### BRIEF DESCRIPTION OF THE DRAWINGS

A more complete understanding of the present invention, and the attendant advantages and features thereof, will be more readily understood by reference to the following detailed description when considered in conjunction with the accompanying drawings wherein:
FIG. 1 is a diagram of an embodiment of a system constructed in accordance with the principles of the present invention;
FIG. 2 is a block diagram of an exemplary base station constructed in accordance with the principles of the present invention;
FIG. 3 is a block diagram of an exemplary mobile station constructed in accordance with the principles of the present invention;
FIG. 4 is a block diagram of an exemplary OFDM architecture constructed in accordance with the principles of the present invention;
FIG. 5 is a block diagram of the flow of received signal processing in accordance with the principles of the present invention;
FIG. 6 is a diagram of an exemplary scattering of pilot symbols among available sub-carriers;
FIG. 7 is a diagram showing an exemplary relay node preamble transmission timing arrangement constructed in accordance with the principles of the present invention;
FIG. 8 is a block diagram showing a multi-hop synchronization arrangement constructed in accordance with the principles of the present invention;
FIG. 9 is a block diagram showing another multi-hop synchronization arrangement constructed in accordance with the principles of the present invention;
FIG. 10 is a diagram of a frame relay node preamble transmission arrangement for synchronization;
FIG 11 is a diagram of a frame relay node preamble transmission arrangement for synchronization and neighbor monitoring;
FIG. 12 is a block diagram of an exemplary network illustrating the entry of a relay node
FIG 13 is a block diagram of an exemplary network illustrating the removal of a relay node;
FIG 14 is a block diagram showing a parent/child alternating relay node preamble arrangement that can be used for full neighborhood monitoring; and
FIG 15 is a block diagram showing a three cycle preamble arrangement.

### DETAILED DESCRIPTION OF THE INVENTION

It is noted that various multi-hop communication schemes are described herein in accordance with the present invention. While described in the context of the Institute of Electrical and Electronics Engineers ("IEEE") 802.16 standards, one of ordinary skill in the art will appreciate that the broader inventions described herein are not limited in this regard and merely for exemplary and explanatory purposes.

According to the present invention, various media access control ("MAC") layer designs for downlink communications between a base station ("BS") and a relay node ("RN") and between an RN and an RN are described. One of ordinary skill in the art will appreciate that the invention described herein is not limited solely to use with downlink communications but is equally applicable to uplink communications as well, for example between a mobile station ("MS") and RN, an RN and an RN, and an RN and a BS.

According to one embodiment of the invention a Relay Station MAC (R-MAC) layer is introduced. According to another embodiment the existing IEEE 802.16e MAC is modified to implement and support the features and functions described herein.

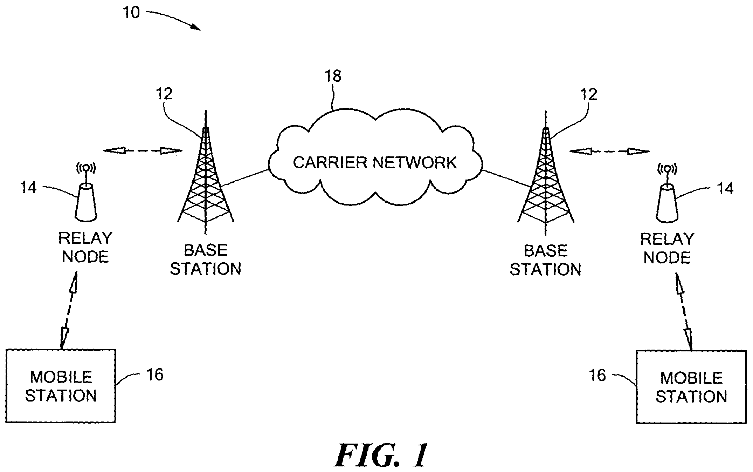

Referring now to the drawing figures in which like reference designators refer to like elements, there is shown in FIG. 1, a system constructed in accordance with the principles of the present invention and designated generally as "10." System 10 includes base stations 12, relay nodes 14 and mobile stations 16. Base stations 12 communicate with one another and with external networks, such as the Internet (not shown), via carrier network 18. Base stations 12 engage in wireless communication with relay nodes 14 and/or mobile stations 16. Similarly, mobile stations 16 engage in wireless communication with relay nodes 14 and/or base stations 12.

Base station 12 can be any base station arranged to wirelessly communicate with relay nodes 14 and/or mobile stations 16. Base stations 12 include the hardware and software used to implement the functions described herein to support the MAC control plane functions. Base stations 12 include a central processing unit, transmitter, receiver, I/O devices and storage such as volatile and nonvolatile memory as may be needed to implement the functions described herein. Base stations 12 are described in additional detail below.

Mobile stations 16, also described in detail below, can be any mobile station including but not limited to a computing device equipped for wireless communication, cell phone, wireless personal digital assistant ("PDA") and the like. Mobile stations 16 also include the hardware and software suitable to support the MAC control plane functions needed to engage in wireless communication with base station 12 either directly or via one or more relay nodes 14. Such hardware can include a receiver, transmitter, central processing unit, storage in the form of volatile and nonvolatile memory, input/output devices, etc.

Relay node 14 is used to facilitate wireless communication between mobile station and base station 12 in the uplink (mobile station 16 to base station 12) and/or the downlink (base station 12 to mobile station 16). A relay node 14 configured in accordance with the principles of the present invention includes a central processing unit, storage in the form of volatile and/or nonvolatile memory, transmitter, receiver, input/output devices and the like. Relay node 14 also includes software to implement the MAC control functions described herein. Of note, the arrangement shown in FIG 1 is general in nature and other specific communication embodiments constructed in accordance with the principles of the present invention are contemplated.

Although not shown, system 10 includes a base station controller ("BSC") or access service network ("ASN") gateway that controls wireless communications within multiple cells, which are served by corresponding base stations ("BS") 12. In general, each base station 12 facilitates communications, using OFDM for example, with mobile stations 16 or via one or more relay nodes 14, of which at least one of which is within the cell 12 associated with the corresponding base station 12. The movement of the mobile stations 16 (and mobile relay nodes 14)in relation to the base stations 12 results in significant fluctuation in channel conditions. It is contemplated that the base stations 12, relay nodes 14 and mobile stations 16 may include multiple antennas in a multiple input multiple output ("MIMO") arrangement to provide spatial diversity for communications.

A high level overview of the mobile stations 16 and base stations 12 of the present invention is provided prior to delving into the structural and functional details of the preferred embodiments. It is understood that relay nodes 14 can incorporate those structural and functional aspects described herein with respect to base stations 12 and mobile stations 16 as may be needed to perform the functions described herein.

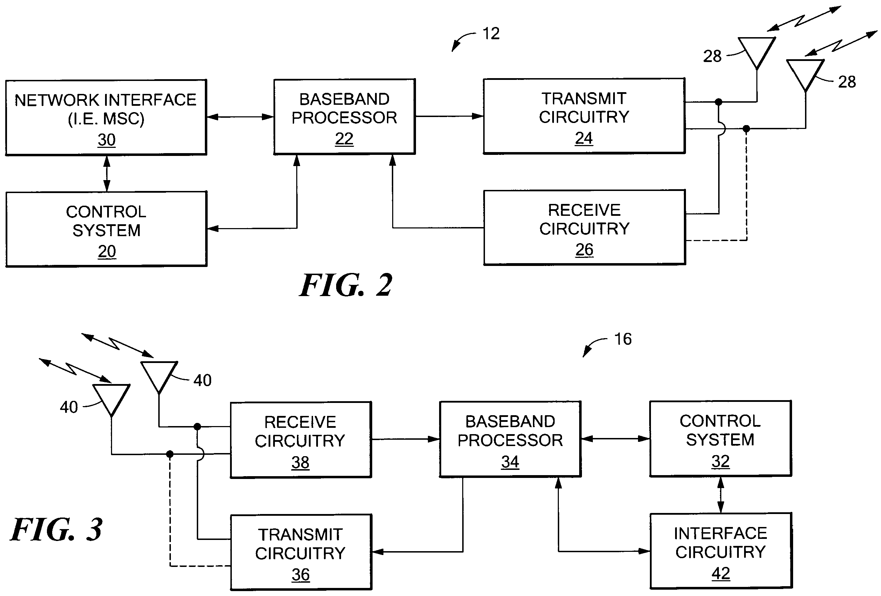

With reference to FIG. 2, an example of a base station 12 configured according to one embodiment of the present invention is illustrated. The base station 12 generally includes a control system 20 such as a central processing unit, a baseband processor 22, transmit circuitry 24, receive circuitry 26, multiple antennas 28, and a network interface 30. As noted above, although the present invention is described with reference to OFDM, the present invention is not limited to such. The receive circuitry 26 receives radio frequency signals bearing information from one or more remote transmitters provided by mobile stations 16 (illustrated in FIG. 3). Preferably, a low noise amplifier and a filter (not shown) cooperate to amplify and remove out-of-band interference from the signal for processing. Down conversion and digitization circuitry (not shown) then down converts the filtered, received signal to an intermediate or baseband frequency signal, which is then digitized into one or more digital streams.

The baseband processor 22 processes the digitized received signal to extract the information or data bits conveyed in the received signal. This processing typically comprises demodulation, decoding, and error correction operations. As such, the baseband processor 22 is generally implemented in one or more digital signal processors ("DSPs") or application-specific integrated circuits ("ASICs"). The received information is then sent across a wireless network via the network interface 30 or transmitted to another mobile station 16 serviced by the base station 12.

On the transmit side, the baseband processor 22 receives digitized data, which may represent voice, data, or control information, from the network interface 30 under the control of control system 20, and encodes the data for transmission. The encoded data is output to the transmit circuitry 24, where it is modulated by a carrier signal having a desired transmit frequency or frequencies. A power amplifier (not shown) amplifies the modulated carrier signal to a level appropriate for transmission, and delivers the modulated carrier signal to the antennas 28 through a matching network (not shown). Modulation and processing details are described in greater detail below.

With reference to FIG. 3, a mobile station 16 configured according to one embodiment of the present invention is described. Similar to base station 12, a mobile station 16 constructed in accordance with the principles of the present invention includes a control system 32, a baseband processor 34, transmit circuitry 36, receive circuitry 38, multiple antennas 40, and user interface circuitry 42. The receive circuitry 38 receives radio frequency signals bearing information from one or more base stations 12. Preferably, a low noise amplifier and a filter (not shown) cooperate to amplify and remove out-of-band interference from the signal for processing. Down conversion and digitization circuitry (not shown) then down convert the filtered, received signal to an intermediate or baseband frequency signal, which is then digitized into one or more digital streams.

The baseband processor 34 processes the digitized received signal to extract the information or data bits conveyed in the received signal. This processing typically comprises demodulation, decoding, and error correction operations, as will be discussed on greater detail below. The baseband processor 34 is generally implemented in one or more digital signal processors ("DSPs") and application specific integrated circuits ("ASICs").

With respect to transmission, the baseband processor 34 receives digitized data, which may represent voice, data, or control information, from the control system 32, which it encodes for transmission. The encoded data is output to the transmit circuitry 36, where it is used by a modulator to modulate a carrier signal that is at a desired transmit frequency or frequencies. A power amplifier (not shown) amplifies the modulated carrier signal to a level appropriate for transmission, and delivers the modulated carrier signal to the antennas 40 through a matching network (not shown). Various modulation and processing techniques available to those skilled in the art are applicable to the present invention.

In OFDM modulation, the transmission band is divided into multiple, orthogonal carrier waves. Each carrier wave is modulated according to the digital data to be transmitted. Because OFDM divides the transmission band into multiple carriers, the bandwidth per carrier decreases and the modulation time per carrier increases. Since the multiple carriers are transmitted in parallel, the transmission rate for the digital data, or symbols, on any given carrier is lower than when a single carrier is used.

OFDM modulation is implemented, for example, through the performance of an Inverse Fast Fourier Transform ("IFFT") on the information to be transmitted. For demodulation, a Fast Fourier Transform ("FFT") on the received signal is performed to recover the transmitted information. In practice, the IFFT and FFT are provided by digital signal processing carrying out an Inverse Discrete Fourier Transform (IDFT) and Discrete Fourier Transform ("DFT"), respectively. Accordingly, the characterizing feature of OFDM modulation is that orthogonal carrier waves are generated for multiple bands within a transmission channel. The modulated signals are digital signals having a relatively low transmission rate and capable of staying within their respective bands. The individual carrier waves are not modulated directly by the digital signals. Instead, all carrier waves are modulated at once by IFFT processing.

In one embodiment, OFDM is used for at least the downlink transmission from the base stations 12 to the mobile stations 16 via relay nodes 14. Each base station 12 is equipped with *n* transmit antennas 28, and each mobile station 16 is equipped with *m* receive antennas 40. Relay nodes 14 can include multiple transmit and receive antennas as well. Notably, the respective antennas can be used for reception and transmission using appropriate duplexers or switches and are so labeled only for clarity.

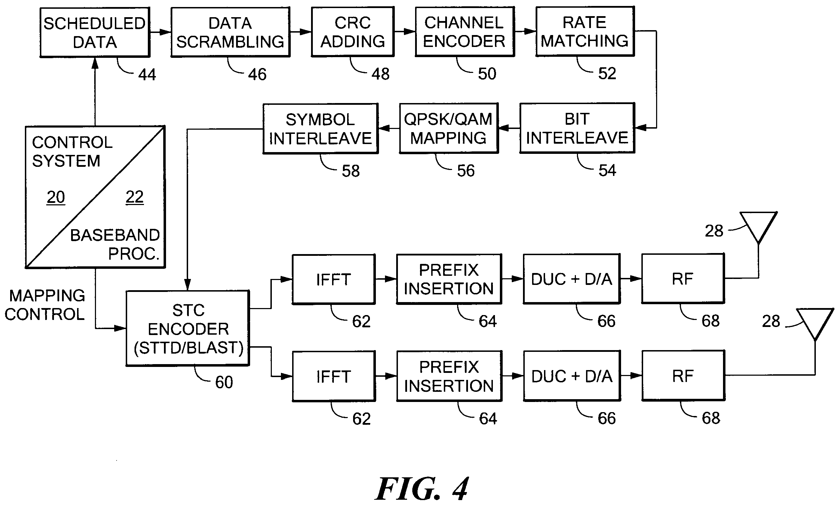

With reference to FIG. 4, a logical OFDM transmission architecture is described according to one embodiment. Initially, the base station controller 10 sends data to be transmitted to various mobile stations 16 to the base station 12. The base station 12 may use the channel quality indicators ("CQIs") associated with the mobile stations to schedule the data for transmission as well as select appropriate coding and modulation for transmitting the scheduled data. The CQIs may be provided directly by the mobile stations 16 or determined at the base station 12 based on information provided by the mobile stations 16. In either case, the CQI for each mobile station 16 is a function of the degree to which the channel amplitude (or response) varies across the OFDM frequency band.

The scheduled data 44, which is a stream of bits, is scrambled in a manner reducing the peak-to-average power ratio associated with the data using data scrambling logic 46. A cyclic redundancy check ("CRC") for the scrambled data is determined and appended to the scrambled data using CRC adding logic 48. Next, channel coding is performed using channel encoder logic 50 to effectively add redundancy to the data to facilitate recovery and error correction at the mobile station 16. Again, the channel coding for a particular mobile station 16 is based on the CQI. The channel encoder logic 50 uses known Turbo encoding techniques in one embodiment. The encoded data is then processed by rate matching logic 52 to compensate for the data expansion associated with encoding.

Bit interleaver logic 54 systematically reorders the bits in the encoded data to minimize the loss of consecutive data bits. The resultant data bits are systematically mapped into corresponding symbols depending on the chosen baseband modulation by mapping logic 56. Preferably, Quadrature Amplitude Modulation ("QAM") or Quadrature Phase Shift Key ("QPSK") modulation is used. The degree of modulation is preferably chosen based on the CQI for the particular mobile station. The symbols may be systematically reordered to further bolster the immunity of the transmitted signal to periodic data loss caused by frequency selective fading using symbol interleaver logic 58.

At this point, groups of bits have been mapped into symbols representing locations in an amplitude and phase constellation. When spatial diversity is desired, blocks of symbols are then processed by space-time block code ("STC") encoder logic 60, which modifies the symbols in a fashion making the transmitted signals more resistant to interference and more readily decoded at a mobile station 16. The STC encoder logic 60 will process the incoming symbols and provide n outputs corresponding to the number of transmit antennas 28 for the base station 12. The control system 20 and/or baseband processor 22 will provide a mapping control signal to control STC encoding. At this point, assume the symbols for the n outputs are representative of the data to be transmitted and capable of being recovered by the mobile station 16. See A.F. Naguib, N. Seshadri, and A.R. Calderbank, "Applications of space-time codes and interference suppression for high capacity and high data rate wireless systems," Thirty-Second Asilomar Conference on Signals, Systems & Computers, Volume 2, pp. 1803-1810, 1998.

For the present example, assume the base station 12 has two antennas 28 (n=2) and the STC encoder logic 60 provides two output streams of symbols. Accordingly, each of the symbol streams output by the STC encoder logic 60 is sent to a corresponding IFFT processor 62, illustrated separately for ease of understanding. Those skilled in the art will recognize that one or more processors may be used to provide such digital signal processing, alone or in combination with other processing described herein. The IFFT processors 62 will preferably operate on the respective symbols to provide an inverse Fourier Transform. The output of the IFFT processors 62 provides symbols in the time domain. The time domain symbols are grouped into frames, which are associated with a prefix by like insertion logic 64. Each of the resultant signals is up-converted in the digital domain to an intermediate frequency and converted to an analog signal via the corresponding digital up-conversion ("DUC") and digital-to-analog (D/A) conversion circuitry 66. The resultant (analog) signals are then simultaneously modulated at the desired RF frequency, amplified, and transmitted via the RF circuitry 68 and antennas 28. Notably, pilot signals known by the intended mobile station 16 are scattered among the sub-carriers. The mobile station 16, which is discussed in detail below, will use the pilot signals for channel estimation.

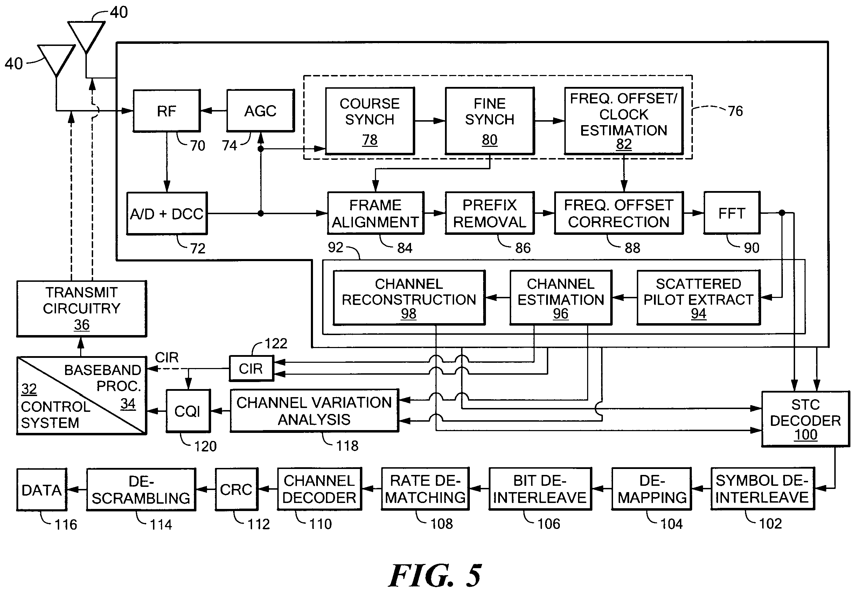

Reference is now made to FIG. 5 to illustrate reception of the transmitted signals by a mobile station 16. Upon arrival of the transmitted signals at each of the antennas 40 of the mobile station 16, the respective signals are demodulated and amplified by corresponding RF circuitry 70. For the sake of conciseness and clarity, only one of the receive paths is described and illustrated in detail, it being understood that a receive path exists for each antenna 40. Analog-to-digital ("A/D") converter and down-conversion circuitry 72 digitizes and downconverts the analog signal for digital processing. The resultant digitized signal may be used by automatic gain control circuitry ("AGC") 74 to control the gain of the amplifiers in the RF circuitry 70 based on the received signal level.

Initially, the digitized signal is provided to synchronization logic 76, which includes coarse synchronization logic 78, which buffers several OFDM symbols and calculates an auto-correlation between the two successive OFDM symbols. A resultant time index corresponding to the maximum of the correlation result determines a fine synchronization search window, which is used by fine synchronization logic 80 to determine a precise framing starting position based on the headers. The output of the fine synchronization logic 80 facilitates frame acquisition by frame alignment logic 84. Proper framing alignment is important so that subsequent FFT processing provides an accurate conversion from the time to the frequency domain. The fine synchronization algorithm is based on the correlation between the received pilot signals carried by the headers and a local copy of the known pilot data. Once frame alignment acquisition occurs, the prefix of the OFDM symbol is removed with prefix removal logic 86 and resultant samples are sent to frequency offset correction logic 88, which compensates for the system frequency offset caused by the unmatched local oscillators in the transmitter and the receiver. Preferably, the synchronization logic 76 includes frequency offset and clock estimation logic 82, which is based on the headers to help estimate such effects on the transmitted signal and provide those estimations to the correction logic 88 to properly process OFDM symbols.

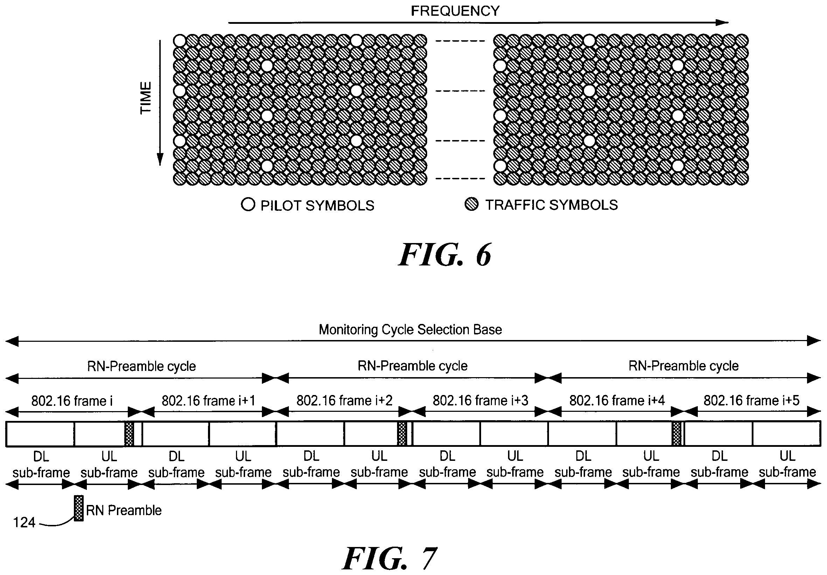

At this point, the OFDM symbols in the time domain are ready for conversion to the frequency domain using FFT processing logic 90. The results are frequency domain symbols, which are sent to processing logic 92. The processing logic 92 extracts the scattered pilot signal using scattered pilot extraction logic 94, determines a channel estimate based on the extracted pilot signal using channel estimation logic 96, and provides channel responses for all sub-carriers using channel reconstruction logic 98. In order to determine a channel response for each of the sub-carriers, the pilot signal is essentially multiple pilot symbols that are scattered among the data symbols throughout the OFDM sub-carriers in a known pattern in both time and frequency. FIG. 6 illustrates an exemplary scattering of pilot symbols among available sub-carriers over a given time and frequency plot in an OFDM environment. Referring again to FIG. 5, the processing logic compares the received pilot symbols with the pilot symbols that are expected in certain sub-carriers at certain times to determine a channel response for the sub-carriers in which pilot symbols were transmitted. The results are interpolated to estimate a channel response for most, if not all, of the remaining sub-carriers for which pilot symbols were not provided. The actual and interpolated channel responses are used to estimate an overall channel response, which includes the channel responses for most, if not all, of the sub-carriers in the OFDM channel.

The frequency domain symbols and channel reconstruction information, which are derived from the channel responses for each receive path are provided to an STC decoder 100, which provides STC decoding on both received paths to recover the transmitted symbols. The channel reconstruction information provides equalization information to the STC decoder 100 sufficient to remove the effects of the transmission channel when processing the respective frequency domain symbols

The recovered symbols are placed back in order using symbol de-interleaver logic 102, which corresponds to the symbol interleaver logic 58 of the transmitter. The de-interleaved symbols are then demodulated or de-mapped to a corresponding bitstream using de-mapping logic 104. The bits are then de-interleaved using bit de-interleaver logic 106, which corresponds to the bit interleaver logic 54 of the transmitter architecture. The de-interleaved bits are then processed by rate de-matching logic 108 and presented to channel decoder logic 110 to recover the initially scrambled data and the CRC checksum. Accordingly, CRC logic 112 removes the CRC checksum, checks the scrambled data in traditional fashion, and provides it to the de-scrambling logic 114 for de-scrambling using the known base station de-scrambling code to recover the originally transmitted data 116.

Note, for purposes of this description, the term "preamble" is construed to include a midamble or any other "amble" placed at any location within a frame.

The present invention provides a number of different embodiments by which preamble overhead can be reduced while still allowing frame synchronization and the monitoring of wireless communication links to neighbor nodes, i.e., neighbor node monitoring.

### Single FSP With Multiple RSPs Where RSPs are of the Same Type and Used for Both Synchronization and Monitoring

In accordance with an embodiment of the invention an RN 14 may periodically alternate between transmitting an FSP and an RSP. This can be used to overcome the problem where RN 14 transmits either an FSP or an RSP but not both. According to this embodiment, during a frame in which RN 14 transmits an FSP, it can monitor the environment for other RNs 14 transmitting RSPs. Similarly, during a frame in which RN 14 transmits an RSP, RN 14 will be able to monitor the environment for other RNs 14 transmitting FSPs. According to an embodiment of the invention, RNs 14 in a given path may change at the same time in order to maintain the integrity of the path, but at a different time to RNs 14 on other paths. This is the case because if RNs 14 on two paths change at the same time, they will continue to be invisible to one another.

According to another embodiment of the invention RN 14 may periodically alternate between transmitting the two RSPs. This may help overcome problems associated with the case where RN 14 transmits two RSPs and an FSP. According to this embodiment, during a frame in which RN 14 transmits the first RSP, it will be able to monitor the environment for other RNs 14 transmitting the second RSP. Similarly, during a frame in which RN 14 transmits the second RSP, it will be able to monitor the environment for other RNs 14 transmitting the first RSP. According to an embodiment, RNs 14 in a given path may change at the same time in order to maintain the integrity of the path, but at a different time to RNs 14 on other paths. As noted above, this is the case because if RNs 14 on two paths change at the same time, they will continue to be invisible to one another.

According to another embodiment of the invention RN 14 periodically stops transmitting a preamble in order to be able to listen for preambles of the same type which may have been transmitted by other RNs in the network. This helps overcome problems in the case where a super-frame is employed where an RSP is transmitted only in alternate frames of the super-frame. For example, an RN 14 which transmits an RSP in each alternate frame will not transmit the RSP for one or more frames in order to listen to RSPs which may be received from other RNs 14. It is not necessary for RNs 14 in a given path to stop their preamble transmission at the same time but according to an embodiment of the invention, an RN may stop transmitting an RSP at a different time than other RNs 14. If two RNs 14 stop transmitting at the same time, they will continue to be invisible to one another.

According to an embodiment of the invention an RN 14 may stop transmitting at a randomly chosen time after the previous time that it stopped, corresponding to a randomly chosen frame in a sequence of frames. This may result in the number of monitoring events per unit time varying with time. Alternatively, RNs 14 may stop transmitting periodically with a predefined period but with a randomly chosen phase during each period - for example, during a randomly chosen frame within the sequence of frames which define a period; the period (e.g., sequence of frames) chosen by a particular RN 14 may start at a random time. This latter method has the advantage that the number of monitoring events per unit time will be constant with time. The probability that two RNs 14 stop transmitting in the same frame, which may be undesirable, can easily be calculated.

### Random Preamble Transmission/Monitoring

Preambles are included in wireless communication frames to facilitate radio environment measurement by relay nodes 14 for relay node path selection as well as synchronization and neighbor monitoring among relay nodes 14. The present invention provides an arrangement to facilitate preamble transmission by relay nodes 14, referred to as a relay node preamble, without interrupting other uses of the preamble, for example cell selection by mobile stations 16 such as are implemented in IEEE 802.16e wireless communication networks. In other words, the present invention provides a relay node preamble arrangement which maintains backward compatibility with mobile stations 16 to allow mobile stations 16 to communication with relay nodes 14 in the same manner that IEEE 802.16e mobile stations 16 would communicate with a serving base station 12.

In accordance with the present invention, a relay node preamble is periodically transmitted, for example in the equivalent of every N 802.16e frames, by relay nodes 14 after entering the network. This relay node preamble is transmitted within an uplink or downlink frame.. Each relay node's preamble (RSP) pseudo noise ("PN") sequence may be the same as assigned to the preamble or may be different. The retransmission and receipt of the relay node preamble may be synchronized so that at the transmission time for the relay node preamble, only one relay node is receiving and all others are transmitting to ensure that the measurement yields a reasonable result. Put another way, if a relay node 14 is transmitting, it cannot simultaneously measure and receive the relay node preamble. It is contemplated that the relay node preamble can be transmitted on a common channel for multiple-carrier enabled and common-channel defined networks. It is also contemplated that relay node preamble reuse within a cell is possible. In such a case, a limited number of PN symbols are available, but transmission is limited so that the preamble can be reused in other areas.

As noted above, if a relay node 14 is configured to be a serving station, that is to deliver and collect traffic to and from mobile stations 16 (during normal operation), the relay node 14 transmits a preamble, such as an IEEE 802.16e preamble, to facilitate cell selection by mobile station 16. However, at the same time due to radio link changes and removal and addition of relay nodes 14, relay nodes 14 continuously monitor their radio environments for purpose of path selection. While one might consider using existing preambles, such as those defined under IEEE 802.16e for such a purpose, this arrangement does not work because when a relay node 14 monitors 802.16 preambles, it must stop its own 802.16 preamble transmission, thereby interfering with the normal operation of mobile stations 16.

A relay node preamble implemented in accordance with the principles of the present invention is transmitted every N frames, referred to as a relay node preamble cycle. The parameters for the relay node preamble, e.g., index, PN sequence, etc. may be the same as an 802.16e preamble for a relay node 14 that is configured to support 802.16 preamble transmission. However, by using a relay node preamble in accordance with the present invention, a relay node does not need to stop its 802.16e preamble transmission for the purpose of its own radio environment measurement.

In order to obtain a reasonable radio environment measurement, a perfect operating environment would be arranged such that at any relay node preamble transmission time only one relay node is monitoring and all others are transmitting. Thus, network-wide relay node preamble plans to avoid more than one relay node monitoring relay node simultaneously can be used. For example, each base station 12 can explicitly establish and indicate the preamble transmission plan to relay nodes 14 associated with that base station 12. In another case, base stations 12 can coordinate scheduling with each other. In either case, this requires extensive synchronization efforts and is difficult to plan due to the removal and addition and movement of relay nodes and master relay nodes.

As such, it is more characteristic that only a small number of relay node preambles can be detected by a relay node 14. Those relay nodes 14 whose relay node preambles can be detected by a relay node 14 may be within a relatively small geographic area around the transmitting relay node 14. If a time interval is defined that includes a small number of relay node preamble cycles and each relay node randomly selects one relay node preamble cycle within this interval for monitoring relay node preamble transmission, the possibility that more than one relay node 14 within this small geographic area is monitoring relay node preambles is very small.

Relay node preamble transmission constructed in accordance with the principles of the present invention is explained with reference to the diagram shown in FIG. 7. In accordance with the present invention, "M" relay node preamble transmission cycles form a base, also referred to as a relay node preamble monitoring cycle selection base, from which a monitoring cycle is randomly selected by a relay node 14. FIG. 7 shows M=3. In accordance, with this arrangement, a number of parameters are contemplated and configured. A relay node preamble transmission cycle ("N") defines the transmission period of the relay node preamble. In other words, a relay node preamble is transmitted every "N" frames. FIG. 7 shows N=2. The first frame in each cycle is referred to as the relay node preamble frame, where a symbol is reserved for relay node preamble transmission. The relay node preamble monitoring cycle selection base ("M") defines the number of cycles within which a relay node randomly selects a cycle and stops its own relay node preamble transmission to monitor other relay node preambles in the corresponding relay node preamble frame. This arrangement avoids the need for system wide synchronization. A base starting frame offset ("k") identifies the index of the frame which starts a base period. Thus, a relay node preamble transmission base starts from a frame indexed as "i" with "i" meeting the formula: mod(i, M x N) = k. Each base includes MxN frames and M cycles. The cycle can be indexed from 0 to M-1. The relay node preamble OFDM symbol offset within a relay node preamble frame "j" identifies the OFDM symbol index within the relay node preamble frame, thereby referring to the first OFDM symbol in the frame.

In sum, relay node preambles are transmitted in relay node preamble window 124. The window is randomly selected by each relay node 14 as to when it will transmit and when it will receive. To do this, one frame within a cycle is randomly selected during which the relay node 14 will monitor. The relay node 14 transmits during the other windows. This arrangement advantageously allows for the maintenance of synchronization and also to enable ongoing radio environment measurement to facilitate path updating.

Where backward IEEE 802.16e compatibility is not required, the above-described preamble arrangement can be used for both relay node radio environment measurement and for transmission to mobile stations 16.

To place the present invention in an exemplary context, it is noted that a cyclic relay node 14 preamble transmission scheme can be coupled with a random monitoring scheme. Exemplary arrangements for so doing are provided and described below.

### Separate Preambles for Synchronization and Neighbor Monitoring

It is contemplated that, instead of using the same preamble for both synchronization and monitoring, different preambles can be employed for these different functions. A relay node preamble has two main functions, (1) to enable RN 14 to be synchronized with its parent RN 14 or BS 12 and (2) to monitor neighboring RNs 14 for potential handoff. In accordance with an embodiment of the present invention, two types of RN preambles may be used for these two purposes. The first is defined as an RN preamble for synchronization ("RPS") and the second is defined as an RN preamble for neighbor monitoring/scanning ("RNS").

According to an embodiment, the RPS and RNS may be transmitted at different frequencies. For example, an RPS may be transmitted every 30ms to maintain synchronization, whereas an RNS may be transmitted less frequently, for example every 200ms because neighbor monitoring need not be performed as frequently.

While the same preamble can be used for both purposes (synchronization and neighbor monitoring) as described above, there may be added benefits to keeping the preambles separate. For example, an RN 14 that does not have child RNs 14 may not need to transmit an RPS but may transmit an RNS. Similarly, a fixed RN 14, e.g., if surrounded by other fixed RNs 14, may not need to transmit an RNS but may use an RPS.

In accordance with an embodiment of the invention, for an RPS the RN preamble transmission is done regularly within a certain time ("Tsync") so that the child RNs 14 in wireless communication with an RN 14 can remain in sync by listening for and to the RPS and making small clock shift adjustments in time. This time is relatively small but depends on the hardware design complexity. For example, Tsync can be as small as 30 msec.

In accordance with an embodiment of the invention, a RNS is transmitted by all RNs 14, though this is not necessary. At least one RN 14 out of a neighboring group can monitor the RNS at a given time in order to monitor its neighbors. These monitoring instances may be rotated among neighboring RNs 14 in a random or deterministic manner. RNSs can be transmitted less frequently than RPSs.

For purposes of providing a context for the following description, two methods for monitoring and synchronization include (1) an odd-even frame alternate RN preamble transmission scheme based on the path hop-length from the supporting base station 12 and (2) a random RN preamble monitoring scheme.

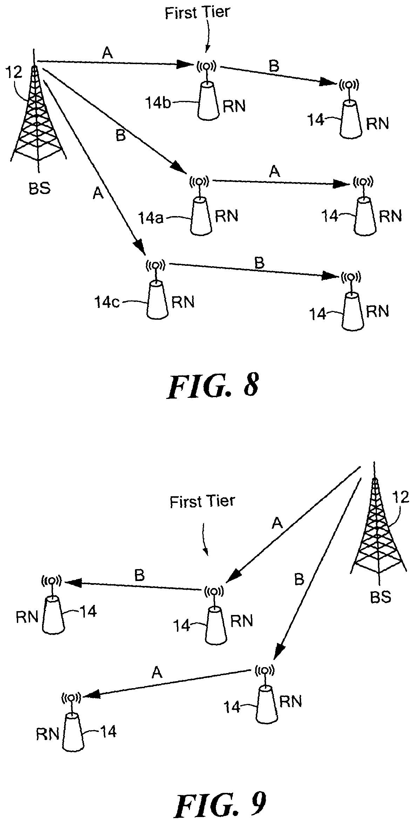

FIGS. 8 and 9 are block diagrams of multi-hop synchronization schemes constructed in accordance with the principles of the present invention. According to this embodiment each first tier hop (from base station 12 to the first relay node 14 in communication therewith) may listen to the A or B preambles from the base station 12 where A and B are two different RN preamble transmission repetition patterns, e.g., preambles are transmitted in different symbol times within a frame or in different frames. The children of an RN listen to their parent's preamble (either A or B cycle) and transmit their own RN preamble in the other cycle.

Note that the first tier RNs 14 can listen to either A or B RN cycles. The cycle can be randomly allocated to BS 12 or BS 12 can deterministically allocate to improve the listening capability of RNs 14 to each other. As seen in the FIG. 8, there is larger visibility of neighbors, i.e., neighbors transmitting on a different cycle. For example, the middle relay node of the first tier RN 14a in FIG. 8 can listen to BS 12 as well as neighboring first tier RNs 14b and 14c.

In another embodiment, BS 12 may have more than two cycles, for example six, and each RN 12 connected to it can have a different cycle (if the total is less than six which will often be the case). Having six different cycle possibilities allows the children in each branch to randomize or deterministically transmit only one cycle. This way, there is a larger possibility that the neighboring RNs 14 use different cycles and hence can listen to each other for monitoring purpose, even without implementing an RNS preamble transmission scheme.

In another variation, the definition of a parent may be modified. That is to say an RN 14 may synchronize with a parent of a parent, so that for synchronization purposes, its parent may differ from its forwarding node for traffic purposes. This may be particularly useful to increase reliability and reduce synchronization requirements. For example when an RN 14 does not support another child RN 14 with respect to synchronization, that RN 14 does not need to frequently transmit an RN preamble. However, depending on the neighborhood scanning method used, RNS transmission may be implemented.

As will be appreciated by one of ordinary skill in the art, the number of cycles shown in FIGS. 8 and 9 are merely for purposes of example, and not all branches need to use all cycles. For example, one branch may cycle A, B, A, whereas another may cycle A, B, C. According to an embodiment the former may be used for a fixed relay node 14 and cycle C may be used for a mobile relay node 14.

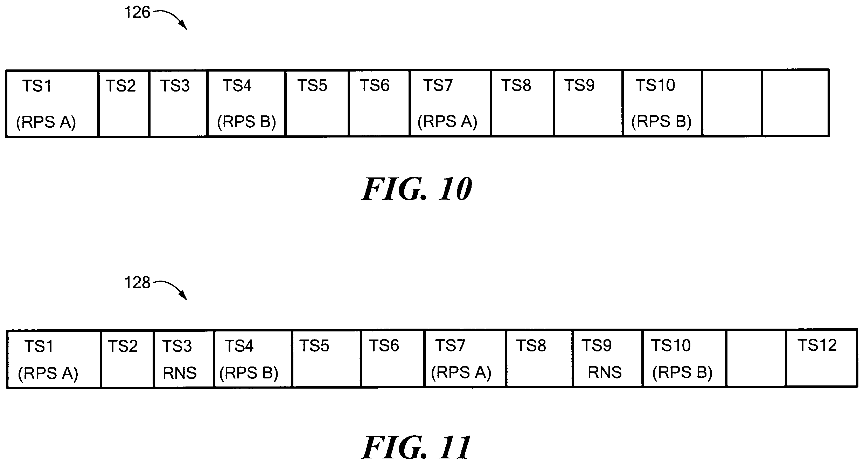

A frame RN preamble transmission ("Tx") scheme 126 for synchronization (RPS) where an RPS need not be sent every frame is described with reference to FIG. 10. Generally speaking, the minimum number of frames is 2N, where 2N* frame_time > Tsync. By way of example, assume that two RN 14 groups use two cycles A and B for their respective RN preamble transmissions. One group sends a preamble transmission starting from pth frame (p<N) and repeats it every 2Nth frame (p, p+2N, p + 3N, etc), the other group sends its preamble transmission starting from the qth frame (p ≠ q, q < N) and repeating every Nth frame (q, q+2N, q + 3N, etc). An embodiment, where 2N = 6, p = 1, q = 4, is shown in FIG. 10. As is shown in FIG. 10, cycle A results in RPS transmission in time slots (frames) 1, 7, etc. and cycle B results in RPS transmission in time slots (frames) 4, 10, etc.

According to an embodiment of the invention other frames may be used for RNS transmission. This embodiment is described with reference to frame arrangement 128 shown in FIG. 11. Although FIG. 11 shows the RNS in a similar location in each frame this arrangement is by no means a requirement. For example the RNS could appear in the third and sixth slots for odd and even frames, respectively. The location of the RNS can be cyclic to avoid unnecessary signaling overhead. According to this embodiment a multi-frame has M frames and a fixed location in each multi-frame is reserved for the RNS preamble. Then, for each RN 14 in a neighboring group, one RN 14 can randomly select one of the M multi-frames for monitoring. For fixed RNs 14, upon entering into the system, RN 14 may know all the neighbors using preamble measurements and therefore, their BS 12 can allocate different frame groups for these neighbors groups to avoid a monitoring collision. For the fixed RNs 14, since quick channel changes are not expected, these measurements can be done at a relatively slower frequency, and some collisions are acceptable. Different measurement arrangements involving different levels of planning are described below in greater detail.

Overhead comparison for different arrangements is described with reference to FIG. 10. For an RN preamble at least 1 transmitter time gap ("TTG"), 1 receive time gap ("RTG") and 1 symbol per preamble is used, totaling 3 symbols. In this case, every frame "costs" about 6% overhead. According to an embodiment of the invention, if 2 RN preambles are used instead in 6 frames, only 1/3 of the frames are used. As such, overhead would be 1/3rd of the previous 6 symbols, or 2%. If RNS is transmitted every 6 frames, the overhead for RNS is 1%. This reduces total overhead to 3%. If RNS is transmitted in every 12 frames, there is only about 0.5% overhead giving a total of 2.5% overhead.

### Combined Monitoring and Synchronization Arrangements

In accordance with embodiments of the invention described below are several possible arrangements for monitoring and synchronization that can be used depending on the environments RN 14 is operating in and the complexity and overhead afforded.

### Arrangement 1: Random monitoring for both synchronization and scanning.

Although this may not achieve the strict synchronization needs, this arrangement uses random monitoring for both synchronization and scanning using the preamble randomization technique described above. Simulation results show that the minimum monitoring time that can be achieved is > 20 frames to avoid monitoring collision. A frame time of 5 msec. may not be sufficient for the synchronization purposes. However, by noting that monitoring collision should be avoided only with the RNs parent (with whom RN 14 is trying to synchronize) a lower minimum monitoring time may be achieved.

### Arrangement 2: Parent/Child alternate cycle transmission and monitoring for synchronization without requiring additional RNS frames.

This arrangement is based on Arrangement 1, but adds certain application limitations to further increase efficiency. If a relay node 14 is mobile, that mobile relay node 14 need not transmit the RN preamble. It can listen to both cycles and quickly assess the neighborhood changes and take a handover and perform other related tasks. This arrangement may be used for a network where mobile relay node 14 does not support synchronization for another relay node 14.

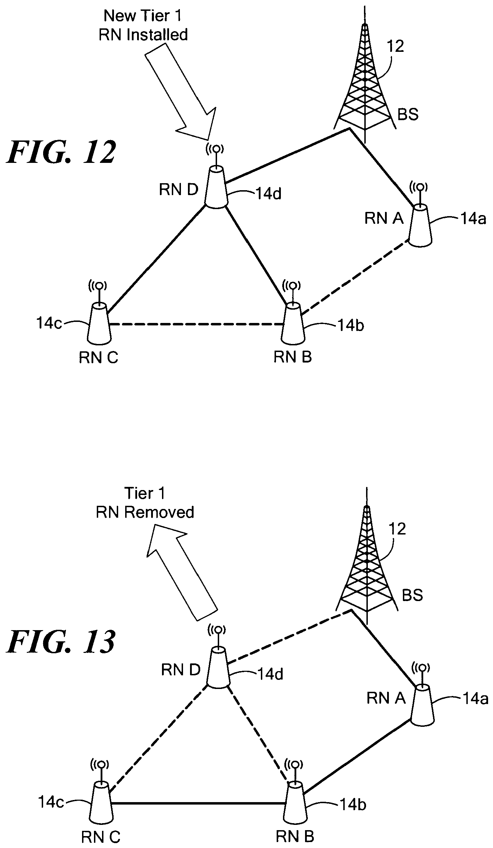

For fixed RNs 14, the initial measurements of its neighbors may be stored. Once that RN 14 is connected to a parent, it normally does not need to be changed. Exceptions might include overloading, installation of a new RN 14 or removal of an existing RN 14. During a forced topology change by BS 12, BS 12 has the neighbor information and can request a handoff by RN 14. Removal and installation of RN 14 in accordance with this arrangement are described with reference to FIGS. 12 and 13. With respect to the arrangements shown in FIGS. 12 and 13, there is no need for an RN 14 to continuously monitor other RNs 14. Monitoring can be done when: (1) a new RN 14 enters system 10, (2) an RN 14 is removed or (3) the topology is changed, due to load balancing for example.

FIG. 12 is a diagram of an exemplary network illustrating the entry of a new RN 14. New RN D 14d, connects to the network using normal RN network entry procedures. During that process the RN D 14d measures the Received Signal Strength ("RSS") from the other RNs 14 and BSs 12 using a frame start preamble. RN D 14d then informs BS 12. BS 12 advises RN B 14b and RN C 14c to handover to RN D 14d based on the report received from RN D 14d. BS 12 makes this instruction because it is aware of the best RN option based on RSS results and individual loading. BS 12 updates the RSS tables stored in all of the other RNs (RN A 12a, RN B 12b and RN C 12c) and its neighboring BSs 12 (not shown) to include the measurements from the new RN D 14s.

RN B 14b can measure the RSS from RN D 14d because RN D 14d is a Tier 1 RN 14. This allows synchronization to continue without an issue. However, RN C 14c cannot measure the RSS of RN D 14d because RN C 14c and RN D 14d both belong to the odd tier (assuming no RNS preambles are used). BS 12 decides the handover of RN C 14c based on the RSS report from RN D 14d. When advised to handover, RN C 14c can immediately stop the transmission of its RN preamble and listen to the odd frame RS preamble from RN D 14d and continue to synchronize using that preamble. Also, RN C 14c may transmit an UL ranging signal to fine tune the UL frame.

FIG. 13 is a diagram of an exemplary network illustrating the removal of an RN, namely RN D 14d In this case, it is assumed that RN B 14b and RN C 14c get to know that their parent is non-functional. RN B 14b and RN C 14c then try to re-enter the network as new RNs. BS 12 informs all of the other RNs 14 and BSs 12 about the removal to update their measurement reports.

During initial entry, it can happen that two RNs try to enter the network during same period. As a result, they cannot measure each other. If they enter at the same tier, there is no way to re-connect to one of them even if that path is better. This is a common issue for odd-even RNS preamble arrangements. One solution is to not assign the tier to both in the same frame, *i.e.* wait at least a few frames to assign the next one.

### Arrangement 3: Parent/child Relay Nodes Alternate Their RN Preamble Scheme (RPS frames) With Additional RNS Frames for Neighborhood Scanning.

This is similar to the combined RPS and RNS frame arrangement discussed above. However, since neighborhood scanning for fixed RNs is not required as regularly as for a mobile RN 14, the RNS monitoring arrangement parameters may be changed depending on whether RN 14 is mobile or fixed.

For fixed RNs 14, a slightly modified version of Arrangement 1 can be used to accommodate slow changes in the channel of a fixed RN 14 network. Since the propagation environment will not change very fast for fixed RNs 14 a measurement done every day or even every hour is sufficient. For this purpose, each RN 14 can send an RN preamble every M frames (other than RPS frames) and during one of those K transmissions it can randomly monitor. K should be considerably larger than the number of possible neighbors to avoid collision (e.g. M = 100 and K = 20). BS 12 can ensure frame synchronization so that every RN 14 transmits at the same time.

For mobile RNs 14, the monitoring arrangement can be done in a more regular manner.

### Arrangement 4: Parent/child Alternate RN preamble Scheme With a Scheme That Uses the RN preambles for synchronization ("RPS") for Neighborhood Scanning as Well.

In the RN preamble scheme used for synchronization, an RN cannot monitor RNs 14 that use the same RPS transmission cycle. This can be relaxed by making RN 14 regularly listen instead of transmit. Since this would impact the monitoring for synchronization, at least two RN preambles may be transmitted during a minimum synchronization period in a single cycle (A or B). Not sending one RN preamble to monitor RNs 14 using the same cycle in a random manner will not impact the synchronization process. This random monitoring can be chosen using the same or a similar method to those discussed above. However, one may wish to avoid monitoring collisions among RNs 14 using the same cycle.

Arrangements 5, 6 and 7 set out below use additional information and techniques to minimize monitoring frequency by avoiding collision monitoring. Arrangements 5-6 can be applied to all the previously described random monitoring arrangements, i.e., all except Arrangement 2.

### Arrangement 5: Locally Planned Without Inter-Base Station Co-ordination.

In accordance with this arrangement, since BS 12 is aware of the neighbors of all RNs 14, BS 12 can allocate a set of monitoring slots to each RN 14 such that its neighbors do not posses the same monitoring slots. If the alternate-cycle based arrangement is used, it can be used to aid the monitoring process as well. Because an RN 14 can monitor RNs 14 belong to other cycles, monitoring collisions are avoided among the RNs 14 belong to the same cycle.

For example, Cycle A members are assigned a monitoring slot group ("MSG"), for example G1 to G8, so that no neighboring cells based on the initial frame start preamble measurement receive the same group. For example, G1 monitors slots: 1, 3, 5; G2 monitors slots: 7, 9, 11; G3 monitors slots: 13, 15, 17, etc. In this case each RN 14 selects one of the time slots out of its group to monitor during each multi-monitoring frame. This avoids monitoring collisions with its own as well as minimizes the collisions with RNs 14 supported by adjoining BSs 12.

Each new RN 14 is allocated an MSG based on its neighbor set that is determined by the measurements during the initial entry phase (using frame start preamble). BS 12 will then assign a parent node and inform RN 14 whether it belongs to Cycle A or Cycle B, whether it is supposed to transmit a preamble and, if so, the MSG.

### Arrangement 6: Locally Planned. Measurement Aided Deterministic Arrangement.

This arrangement is similar to Arrangement 3, but instead of using random transmission, each RN 14 monitors in a fixed slot after a predetermined settling time. BSs 12 share the information about the monitoring slots of its RNs 14 with its neighbors (this is the set of BSs 12 that RNs 14 have identified as having considerable interference).

A new RN 14 is operated as follows. During entry, RN 14 is given the potential available monitoring slot list (similar to an MSG) by BS 12. BS 12 considers its neighbors when deriving the list. RN 14 listens to its neighbors for all the monitoring slots without transmitting its preamble. Then, RN 14 identifies the previously detected strong neighbors' monitoring slots. During initial entry RN 14 measures all the frame start preambles received from all RNs 14 and BSs 12. If RN 14 does not hear a neighbor during a time slot, it can decide that the neighbor is listening during that slot. When all neighbors are accounted for, RN 14 selects a different and unused monitoring slot.

In order to ensure that there is no monitoring collision, RN 14 may listen to an additional slot time. If additional neighboring RNs 14 are detected, it will update and may change its monitoring slot. This arrangement is useful to detect approaching mobile RNs 14.

### Arrangement 7: Locally Planned With BS-BS Co-ordination.

This arrangement is similar to Arrangement 3, but instead of using random monitoring, a fixed monitoring slot is allocated after getting information from BS 12 and is based on knowledge of the neighbors acquired using the frame start preamble. The frame start preamble is usually used by a mobile station 16 to obtain initial synchronization when it enters a network and also serves to maintain synchronization and to carry out continuous monitoring of neighbor base stations.

In accordance with this arrangement, an RN 14 determines its neighbors. BS 12 then informs RN 14 of the neighbor's monitoring slot information (whether a single one or an MSG group). RN 14 determines and decides to use non-colliding monitoring slot and inform BS 12. BS 12 updates all neighbors as to the selected monitoring slot.

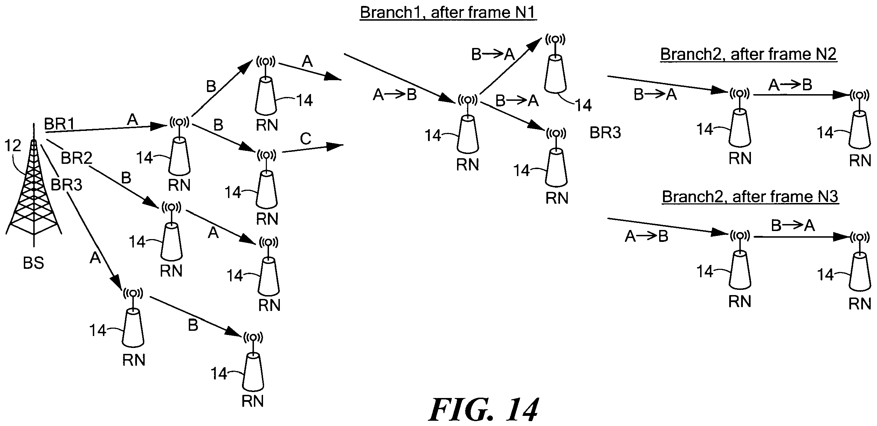

Full neighborhood monitoring is described with reference to the network diagram of FIG. 14. FIG. 14 shows a parent/child alternating RS preamble arrangement that can be used for full neighborhood monitoring. By way of contrast, in the alternating RN preamble arrangement set out above with respect to FIG. 8 & 9, for example (used for synchronization), RNs 14 cannot monitor those RNs 14 which use the same cycle for RN transmission, e.g., group A nodes cannot listen to group A because they cannot transmit and listen at the same time. Because of this, a given RN 14 cannot monitor about 50% of the RNs 14. Accordingly, in this embodiment, each RN 14 (branch) connected to BS 12 may change its RN preamble transmission and monitoring cycle from one cycle to other, e.g., from group A to group B or C, in a random or deterministic manner so as to avoid occasions where two branches change in the same manner at the same time. During each change, in order to maintain synchronization, its child RNs 14 may change their RN preamble transmissions as well and each subordinate RN 14 may change its transmissions.

As shown in FIG. 14, at frame N1, all RNs 14 in Branch 1 ("BR1") may change their RN preamble cycle. Similarly at frames N2 and N3, Branch 2 ("BR2") and Branch 3 ("BR3") may change their cycles, respectively. According to an embodiment, a random number for changing cycles may have a specific range which is determined by how often the neighbors verify that all other neighbors are monitored (described below). This randomness ensures that each RN 14 monitors every other RN 14 within a certain number of frames. Similarly a deterministic pattern can be chosen.

In accordance with the present invention random number generation may be provided as follows. Each random number may have a minimum and maximum limit, x and y, and be generated from a uniform distribution. For example, if x = 5, and y = 10, each branch will stay with same cycle at least 5 frames and change within at least 10 frames. If there are only two cycles, and if RN 14 has more than two RNs 14 connected to it, those RNs 14 will use a common cycle and, therefore, cannot monitor each other.

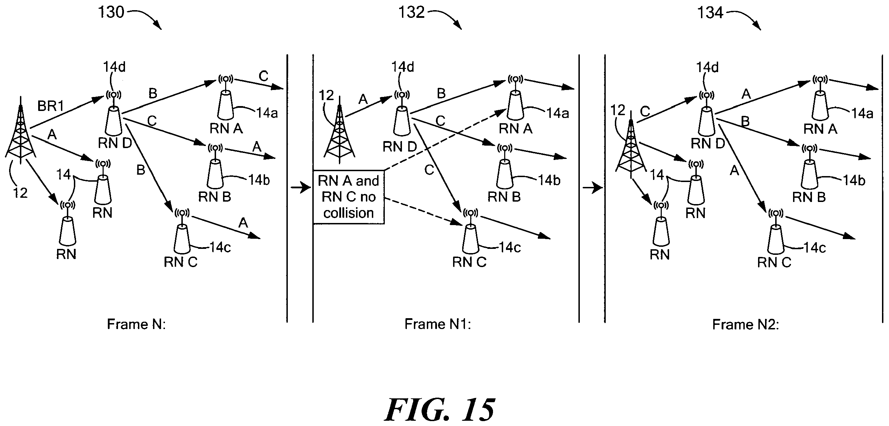

To avoid this issue, at least 3 cycles can be used. An example of a 3 cycle arrangement is described with reference to FIG. 15. For example frame N 130 shows RN D 14d has a parent (BS 12) using cycle A. Then, if RN D 14d has more than one child (RN A 14a, RN B 14b and RN C 14c), RN D 14d can deterministically allocate balanced cycles to get different cycles in the next change. Such is the case because, as is shown in frame N 130, RN A 14a and RN C 14c have a monitoring collision (both are using cycle B). At the next frame N1 132, RN D 14c has changed the cycle for RN C 14c to cycle C to remove the collision. Its children can also switch randomly or deterministically before the parent branch changes its cycle. This assumes the children will monitor each other within a certain time. Frame N2 134 shows that the full branch BR1 can also be instructed to change cycles. In this case, RN D 14d is now using cycle C, RNs A and C are using cycle A and RN B 14b is using cycle B. As will be apparent to one of ordinary skill in the art there are many possible ways which can be implemented to avoid monitoring collisions with the children of an RN 14. Note, this concept can be generalized to the N tier case in a similar fashion.

A method by which a parent node can instruct a child to change monitoring cycles is described. An explicit messaging, implicit direction or random approach can be used.

With respect to explicit messaging, the parent can use an explicit message to instruct the child to change to a cycle decided by the parent. Cycle determination can be random or deterministic as discussed above. This method is simplified if the parent for synchronization is same as the parent for data transmission.

With respect to implicit direction, the parent may change the cycle without informing the child. Once the child detects that there is no transmission received in the expected slot, the child may stop its RN preamble transmissions and listen to all the slots. When the child detects that the parent has changed, it may generate its own RN preamble in the other cycles, so that its children can listen. If there is more than one child, the children may change their listening slot randomly or deterministically based on instruction from the parent (in this case an explicit message may be used).

With respect to the determining randomness method, depending on the minimum neighborhood monitoring frequency requirement, random changes may be used. The random generator ranges, e.g., x, y, depends on these requirements. As will be apparent to one of skill in the art, such a random number generator can be designed to ensure all RNs 14 locate all neighbors within a certain time (or achieve such location with a certain probability).

In accordance with embodiments of the invention, methods to determine how to provide monitoring cycle information to RNs 14 and BSs 12 is discussed. Initially, it is noted that monitoring and transmission of the RN preamble can be done deterministically or randomly, and at regular intervals or when required. Each is discussed.

Monitoring can be done on a random or periodic manner. In this case, all parameters of the random monitoring arrangement may be sent prior to monitoring. This requires the least messaging structure. All BSs 12 and RNs 14 may be provided with the parameters of a random repetition pattern. Each node may follow the instructions according to these parameters. Parameters may be sent to each BS 12 /RN 14 during its installation using a configuration message.

Random Monitoring can be done at specific times based on the requirements of the BS 12 or RN 14. In this case, the configuration message contains parameters that may be sent to the RNs 14 and BSs 12 prior to starting such measurement. If parameters are common for all applications of measurement, the parameters may be configured at the initialization of the node and provide the start and end time for the transmit/monitor cycle. In this case if different BSs 12 want to start at different times and end at different times simultaneously, the earliest start time and latest end time may need to be determined. In some cases, only a limited number of BSs 12 or RNs 14 may be involved in the processes as determined by the BS 12.

Deterministic monitoring uses predetermined exact times for the transmission and monitoring for each RN 14 or BS 12. Times may be decided either by a central entity or an individual BS 12 using a specific co-ordination scheme. Times may also be independently determined by each RN 14 using a detect and adjust type merging solution (which would take some time after initialization to settle to a particular monitoring location). There are again two cases. In one case, a deterministic monitor/Tx scheme may be invoked on regular intervals. For the other case, a deterministic monitoring/Tx schedule may be specified and provided to the involved nodes (BS 12 and/or RN 14).

Deterministic transmitting and monitoring in regular intervals uses an agreed upon network-wide frame numbering scheme. The numbering may be synchronous across BSs 12. In one embodiment, a central entity may determine the times RNs14 and BS 12 may monitor and times RN 14 and BS 12 may transmit the preamble according to a regular pattern. The central entity provides these cyclic Tx/monitor patterns to the RNs 12 and BSs 14 after the initialization of each node. A new RN 14 may also be allocated a cycle after it enters a network. This information is provided to all BSs 12.

In another embodiment, during initialization based on channel measurements, each RN 14 or BS 12 may try several time slots in accordance with a predetermined algorithm and after some time settle to a particular cycle based on the measurements. The algorithm may be merged quickly for this purpose. An example is given below.

Deterministic transmitting and monitoring can be done at specific times or for specific durations as may be established by BS 12 or RN 14. Under this arrangement, a network wide frame numbering scheme may be agreed upon in which the numbering may be synchronous across BSs 12.

In one embodiment, a central entity may determine the monitoring and transmission of all RNs 14 and provide this information to the BS 12. BS 12 then provides the monitoring and transmission time slot information to its member RNs 14.

In another embodiment, an individual BS 12 may decide to scan at a particular time or for a particular duration. A BS 12 that needs monitoring may initiate a message to its neighboring BSs 12 if they are involved, e.g., over the backhaul, indicating the intent for monitoring. The other BSs 12 may acknowledge the message and wait for further instructions on monitoring times. If in the same time the other BS 12 has also sent a similar request, both BSs 12 may wait a random time the range of which is determined by a system parameter and then send the request again. This may be repeated until success. After receiving acknowledgement from the other BSs 12, the initiating BS 12 may send the start time and end time and monitoring and transmission frame information to the other BSs 12. The other BSs 12 sent this information to their respective subordinated RNs 14.

The deterministic pattern may be predefined or change from one scanning to another scanning period. When the pattern is predefined, there is no need to send the transmit and monitoring pattern each time a scanning request is made. In that case, a configuration message may initially be sent to RNs 14 by their BS 12 providing sufficient parameters for the algorithm.

An exemplary message arrangement is provided. A messaging arrangement to report the measurements to BS 12 may also be implemented. It is noted that a frame numbering arrangement can be identified and agreed upon across the network. In accordance with an embodiment of the invention a message for deterministic transmitting and monitoring at a predetermined time and for a specific duration is provided as follows:
(1) BS 12 notifies other neighbor BSs 12 of its intent to take a future measurement together with the start and end times and/or frame numbers.
(2) The neighboring BSs 12 send an acknowledge message.
(3) If there is a collision, i.e., two neighboring BSs 12 make substantially simultaneous requests, (1) and (2) are repeated after waiting a random time. The random time may be generated using a predefined parameter sent as part of an initial configuration message.
(4) Collisions may be resolved by incorporating a larger group of RNs 14 and/or BSs 12 to transmit and monitor.
(5) A scanning request message in accordance with the present invention includes the following fields:
   A. Start frame
   B. End frame
   C. The distance between two frames at which the transmitting and monitoring is done, e.g., every third frame.
   D. In each transmit/monitor frame, an indication of which BS 12 or RS 14 (or multiple BSs 12 or RNs 14) should monitor. Other nodes receiving the message transmit the preamble in that frame.

Although reference was made to existing standards such as the IEEE 802.16e, j and s standards, it is understood that the present invention is not limited solely to the use of these standards and that reference to these standards is made for the purpose of illustration and explanation, as well as the understanding that the functions of the present invention can be implemented by extending the standards as described herein.

The present invention provides a method and system that uses preamble to support both synchronization and neighbor node monitoring in an efficient manner such that the processing and wireless communication channel overhead associated with this synchronization and neighbor node monitoring is reduced.

It will be appreciated by persons skilled in the art that the present invention is not limited to what has been particularly shown and described herein above, but the scope of the invention is defined by the claims. In addition, unless mention was made above to the contrary, it should be noted that all of the accompanying drawings are not to scale. A variety of modifications and variations are possible in light of the above teachings without departing from the scope of the invention, which is limited only by the following claims.

## Claims

1. A method for wireless synchronization and neighbour node monitoring in a multi-hop network, the method comprising:
a base station transmitting a first preamble using a first repetition cycle and transmitting a second preamble using a second repetition cycle;
and a first first-tier hop relay node monitoring for the first preamble in the first repetition cycle and transmitting the second preamble in the second repetition cycle;
and a child-relay node of the first first-tier hop relay node monitoring for the second preamble in the second repetition cycle and transmitting the first preamble in the first repetition cycle;
and a second first-tier hop relay node monitoring for the second preamble in the second repetition cycle and transmitting the first preamble in the first repetition cycle;
and a child-relay node of the second first-tier hop relay node monitoring for the first preamble in the first repetition cycle and transmitting the second preamble in the second repetition cycle;
wherein the first repetition cycle being different than the second repetition cycle.

2. The method of Claim 1, wherein the base station may apply more than two repetition cycles connecting to more than two first-tier hop relay nodes.

3. The method of Claim 2, wherein a repetition cycle is divided into at least two sub-cycles in which at least one sub-cycle is used for synchronization and at least other sub-cycle is used for neighbor monitoring.

4. The method of Claim 2, wherein a repetition cycle is divided into at least two sub-cycles, wherein the sub-cycles are distinguished by separation in their respective transmission periods by at least one of:
a different location within a frame; and
locations in different ones of a plurality of frames in which the plurality of frames comprise a multi-frame.

5. The method of claim 4, wherein the first and second preambles are synchronization preambles.

6. A wireless communication system, comprising:
a base station, configured for transmitting a first preamble using a first repetition cycle and transmitting a second preamble using a second repetition cycle; and
a first first-tier hop relay node, configured for monitoring the first preamble in the first repetition cycle and transmitting the second preamble in the second repetition cycle; and
a child-relay node of the first first-tier hop relay node, configured for monitoring the second preamble in the second repetition cycle and transmitting the first preamble in the first repetition cycle; and
a second first-tier hop relay node, configured for monitoring the second preamble in the second repetition cycle and transmitting the first preamble in the first repetition cycle; and
a child-relay node of the second first-tier hop relay node, configured for monitoring the first preamble in the first repetition cycle and transmitting the second preamble in the second repetition cycle;
wherein the first repetition cycle being different than the second repetition cycle.

7. The system of Claim 6, wherein the system is an IEEE 802.16j system.

8. The system of Claim 6, wherein the first and second preambles are synchronization preambles.

## Patentansprüche

1. Verfahren zur drahtlosen Synchronisation und Nachbarknotenüberwachung in einem Multi-Hop-Netzwerk, wobei das Verfahren Folgendes umfasst:
eine Basisstation, die eine erste Präambel unter Verwendung eines ersten Wiederholungszyklus sendet und eine zweite Präambel unter Verwendung eines zweiten Wiederholungszyklus sendet;
und einen ersten erstrangigen Hop-Relaisknoten, der die erste Präambel in dem ersten Wiederholungszyklus überwacht und die zweite Präambel in dem zweiten Wiederholungszyklus sendet;
und einen Kind-Relaisknoten des ersten erstrangigen Hop-Relaisknotens, der die zweite Präambel in dem zweiten Wiederholungszyklus überwacht und die erste Präambel in dem ersten Wiederholungszyklus sendet;
und einen zweiten erstrangigen Hop-Relaisknoten, der die zweite Präambel in dem zweiten Wiederholungszyklus überwacht und die erste Präambel in dem ersten Wiederholungszyklus sendet;
und einen Kind-Relaisknoten des zweiten erstrangigen Hop-Relaisknotens, der die erste Präambel in dem ersten Wiederholungszyklus überwacht und die zweite Präambel in dem zweiten Wiederholungszyklus sendet;
wobei der erste Wiederholungszyklus anders als der zweite Wiederholungszyklus ist.

2. Verfahren nach Anspruch 1, wobei die Basisstation mehr als zwei Wiederholungszyklen beim Anschließen an mehr als zwei erstrangige Hop-Relaisknoten anwenden kann.

3. Verfahren nach Anspruch 2, wobei ein Wiederholungszyklus in mindestens zwei Teilzyklen unterteilt wird, von denen mindestens ein Teilzyklus zur Synchronisation und mindestens ein anderer Teilzyklus zur Nachbarüberwachung verwendet wird.

4. Verfahren nach Anspruch 2, wobei ein Wiederholungszyklus in mindestens zwei Teilzyklen unterteilt wird, wobei sich die Teilzyklen durch eine Trennung in ihren jeweiligen Sendeperioden durch mindestens eines unterscheiden von:
einer anderen Stelle innerhalb eines Rahmens; und
Stellen in verschiedenen Rahmen einer Vielzahl von Rahmen, bei denen die Vielzahl von Rahmen einen Mehrfachrahmen umfasst.

5. Verfahren nach Anspruch 4, wobei die ersten und zweiten Präambeln Synchronisationspräambeln sind.

6. Drahtloses Kommunikationssystem, umfassend:
eine Basisstation, die konfiguriert ist, um eine erste Präambel unter Verwendung eines ersten Wiederholungszyklus zu senden und eine zweite Präambel unter Verwendung eines zweiten Wiederholungszyklus zu senden; und
einen ersten erstrangigen Hop-Relaisknoten, der konfiguriert ist, um die erste Präambel in dem ersten Wiederholungszyklus zu überwachen und die zweite Präambel in dem zweiten Wiederholungszyklus zu senden; und
einen Kind-Relaisknoten des ersten erstrangigen Hop-Relaisknotens, der konfiguriert ist, um die zweite Präambel in dem zweiten Wiederholungszyklus zu überwachen und die erste Präambel in dem ersten Wiederholungszyklus zu senden; und
einen zweiten erstrangigen Hop-Relaisknoten, der konfiguriert ist, um die zweite Präambel in dem zweiten Wiederholungszyklus zu überwachen und die erste Präambel in dem ersten Wiederholungszyklus zu senden; und
einen Kind-Relaisknoten des zweiten erstrangigen Hop-Relaisknotens, der konfiguriert ist, um die erste Präambel in dem ersten Wiederholungszyklus zu überwachen und die zweite Präambel in dem zweiten Wiederholungszyklus zu senden;
wobei der erste Wiederholungszyklus anders als der zweite Wiederholungszyklus ist.

7. System nach Anspruch 6, wobei das System ein IEEE802.16j-System ist.

8. System nach Anspruch 6, wobei die ersten und zweiten Präambeln Synchronisationspräambeln sind.

## Revendications

1. Procédé destiné à une synchronisation sans fil et à une surveillance de noeud voisin dans un réseau à sauts multiples, le procédé comprenant les étapes consistant à :
par le biais d'une station de base, transmettre un premier préambule en utilisant un premier cycle de répétition et transmettre un deuxième préambule en utilisant un deuxième cycle de répétition ;
et par le biais d'un premier noeud de relais de saut de premier niveau, surveiller le premier préambule dans le premier cycle de répétition et transmettre le deuxième préambule dans le deuxième cycle de répétition ;
et par le biais d'un noeud de relais enfant du premier noeud de relais de saut de premier niveau, surveiller le deuxième préambule dans le deuxième cycle de répétition et transmettre le premier préambule dans le premier cycle de répétition ;
et par le biais d'un deuxième noeud de relais de saut de premier niveau, surveiller le deuxième préambule dans le deuxième cycle de répétition et transmettre le premier préambule dans le premier cycle de répétition ;
et par le biais d'un noeud de relais enfant du deuxième noeud de relais de saut de premier niveau, surveiller le premier préambule dans le premier cycle de répétition et transmettre le deuxième préambule dans le deuxième cycle de répétition ;
le premier cycle de répétition étant différent du deuxième cycle de répétition.

2. Procédé de la revendication 1, dans lequel la station de base peut appliquer plus de deux cycles de répétition se connectant à plus de deux noeuds de relais de saut de premier niveau.

3. Procédé de la revendication 2, dans lequel un cycle de répétition est divisé en au moins deux sous-cycles dans lesquels au moins un sous-cycle est utilisé pour la synchronisation et au moins un autre sous-cycle est utilisé pour la surveillance de voisinage.

4. Procédé de la revendication 2, dans lequel un cycle de répétition est divisé en au moins deux sous-cycles, dans lequel les sous-cycles sont distingués par séparation dans leurs périodes de transmission respectives par au moins l'un :
d'un emplacement différent dans une trame ; et
des emplacements dans des différentes trames d'une pluralité de trames où la pluralité de trames comprennent une multi-trame.

5. Procédé de la revendication 4, dans lequel les premier et deuxième préambules sont des préambules de synchronisation.

6. Système de communication sans fil, comprenant :
une station de base, configurée pour transmettre un premier préambule en utilisant un premier cycle de répétition et transmettre un deuxième préambule en utilisant un deuxième cycle de répétition ; et
un premier noeud de relais de saut de premier niveau, configuré pour surveiller le premier préambule dans le premier cycle de répétition et transmettre le deuxième préambule dans le deuxième cycle de répétition ; et
un noeud de relais enfant du premier noeud de relais de saut de premier niveau, configuré pour surveiller le deuxième préambule dans le deuxième cycle de répétition et transmettre le premier préambule dans le premier cycle de répétition ; et
un deuxième noeud de relais de saut de premier niveau, configuré pour surveiller le deuxième préambule dans le deuxième cycle de répétition et transmettre le premier préambule dans le premier cycle de répétition ; et
un noeud de relais enfant du deuxième noeud de relais de saut de premier niveau, configuré pour surveiller le premier préambule dans le premier cycle de répétition et transmettre le deuxième préambule dans le deuxième cycle de répétition ;
le premier cycle de répétition étant différent du deuxième cycle de répétition.

7. Système de la revendication 6, le système étant un système IEEE 802.16j.

8. Système de la revendication 6, dans lequel les premier et deuxième préambules sont des préambules de synchronisation.
